# EUROPÄISCHE PATENTSCHRIFT

(11) **EP 3 380 758 B1**
(45) Veröffentlichungstag und Bekanntmachung des Hinweises auf die Patenterteilung: **20.11.2019**
(21) Anmeldenummer: 16787419.7
(22) Anmeldetag: 25.10.2016
(51) Int. Cl.: F16H 61/421, F16H 61/431

(54) **LEISTUNGSVERZWEIGUNGSGETRIEBE UND VERFAHREN ZUM BETRIEB EINES LEISTUNGSVERZWEIGUNGSGETRIEBES**
POWER SPLIT GEARBOX AND METHOD FOR OPERATING A POWER SPLIT GEARBOX
TRANSMISSION DE DÉRIVATION DE PUISSANCE ET PROCÉDÉ POUR FAIRE FONCTIONNER UNE TRANSMISSION DE DÉRIVATION DE PUISSANCE

(30) Priorität: 25.11.2015 DE 102015223250
(43) Veröffentlichungstag der Anmeldung: 03.10.2018
(73) Patentinhaber: ZF Friedrichshafen AG, 88046 Friedrichshafen (DE)
(72) Erfinder: LEGNER, Jürgen, 88048 Friedrichshafen (DE)
(86) Internationale Anmeldenummer: PCT/EP2016/075604
(87) Internationale Veröffentlichungsnummer: WO 2017/089054

(56) Entgegenhaltungen:
- WO-A1-99/24738
- DE-A1-102007 047 195
- DE-A1-102012 213 170
- DE-A1-102012 213 173
- DE-A1-102013 200 390
- GB-A- 1 206 196
- US-A- 2 985 144

## Beschreibung

Die Erfindung bezieht sich auf ein Leistungsverzweigungsgetriebe nach der im Oberbegriff von Anspruch 1 näher definierten Art.

Die DE102013204746A1 offenbart ein Leistungsverzweigungsgetriebe mit sekundärer Kopplung, d. h. dass das Summierungsgetriebe drei Wellen aufweist, wobei eine erste Welle mit der Antriebswelle in Wirkverbindung steht, die zweite Welle mit der ersten hydraulischen Einheit in Wirkverbindung steht und die dritte Welle mit der zweiten hydraulischen Einheit und der Abtriebswelle in Wirkverbindung steht. Die erste hydraulische Einheit und die zweite hydraulische Einheit sind mit einem gemeinsamen Joch zum Verstellen des Hubvolumens, wobei eine erste Grenze des Fahrbereichs erreicht ist, wenn das Fördervolumen der hydraulischen Pumpe Null ist und das Schluckvolumen des hydraulischen Motors maximal ist und eine zweite Grenze des Fahrbereichs erreicht ist, wenn das Fördervolumen der hydraulischen Pumpe maximal ist und das Schluckvolumen des hydraulischen Motors Null ist. Je nach Ansteuerung dieser Hubvolumenverstellung kann es zu unkontrollierbaren Fahrsituationen kommen, wenn beispielsweise sich das Fahrzeug bei Maximalgeschwindigkeit befindet und die Hubvolumenverstellung sehr schnell in Richtung Minimalgeschwindigkeit verstellt.

Die DE102013200390A1 offenbart eine Verstelleinrichtung zum Verstellen der hydraulischen Einheiten eines Leistungsverzweigungsgetriebes.

DE102007047195 offenbart die Merkmale des Oberbegriffes der Ansprüche 1 und 7.

Der vorliegenden Erfindung liegt die Aufgabe zugrunde ein Leistungsverzweigungsgetriebe zu schaffen, bei welchem die Betriebssicherheit erhöht ist, und unkontrollierbare Fahrsituationen ausgeschlossen sind.

Die Aufgabe wird mit einem auch die kennzeichnenden Merkmale des Hauptanspruchs aufweisenden gattungsgemäßen Leistungsverzweigungsgetriebe gelöst.

Erfindungsgemäß weist das Leistungsverzweigungsgetriebe mit sekundärer Koppelung eine Verstelleinrichtung zum Verstellen des Hubvolumens der ersten und der zweiten hydraulischen Einheit auf, welche in Abhängigkeit einer elektrischen Stromstärke das Hubvolumen verstellt. Die Verstelleinrichtung ist so ausgebildet, dass im stromlosen Zustand die hydraulische Einheit, welche mit dem Abtrieb des Leistungsverzweigungsgetriebes in Wirkverbindung steht, so verstellt wird, dass diese kein Hubvolumen aufweist. Arbeitet diese hydraulische Einheit als hydraulischer Motor, so weist dieser in diesem stromlosen Zustand kein Schluckvolumen auf. Ein stromloser Zustand kann beispielsweise dann auftreten, wenn die gesamte elektrische Versorgung des Fahrzeugs ausfällt.

Es besteht die Möglichkeit zusätzlich im stromlosen Zustand eine Kupplung zu öffnen, welche die Antriebswelle des Leistungsverzweigungsgetriebes vom Summierungsgetriebe bzw. einer Welle des Summierungsgetriebes trennt, so dass die hydraulische Einheit, welche mit dem Abtrieb verbunden ist, kein Drehmoment abstützen kann.

Des Weiteren ist es vorteilhaft, wenn die andere hydraulische Einheit, beispielsweise die hydraulische Pumpe, im stromlosen Zustand auf ihr maximales Hubvolumen verstellt ist.

Bei einem Leistungsverzweigungsgetriebe, bei welchem zwischen dem Summierungsgetriebe und dem Abtrieb keine weiteren Schaltelemente mehr vorhanden sind, um beispielsweise weitere Fahrbereiche zu schalten, somit bei einem Einbereichsgetriebe kann der Kraftschluss zwischen dem Abtrieb und der hydraulischen Einheit, welche mit dem Abtrieb in Wirkverbindung steht, nicht getrennt werden. Bewegt sich nun das Fahrzeug mit hoher Geschwindigkeit und in Folge eines Defekts, beispielsweise eines Stromausfalls der Elektrik, und würde die hydraulische Einheit, welche mit dem Abtrieb in Wirkverbindung steht, auf ihr maximales Hubvolumen verstellt, so würde dies zu einem unkontrollierten verzögern der Räder und Rutschen des Fahrzeugs führen. Indem jedoch im stromlosen Zustand, beispielsweise bei einem Defekt der Elektrik die hydraulische Einheit, welche mit dem Abtrieb in Wirkverbindung steht, auf das Hubvolumen Null verstellt ist und die Kupplung, welche zwischen dem Summierungsgetriebe und der Antriebswelle angeordnet ist, im Öffnungssinne betätigt wird und die andere hydraulische Einheit auf ihr maximales Hubvolumen verstellt ist, kann an der hydraulischen Einheit, welche mit dem Abtrieb in Wirkverbindung steht, somit der motorischen hydraulischen Einheit, kein Drehmoment mehr abgestützt werden, welches somit nicht zu einem rutschen der Fahrzeugräder führt.

Vorzugsweise weist die Verstelleinrichtung einen Verstellzylinder zum Verstellen des Hubvolumens und ein mit diesem zusammenwirkendes Positionsregelventil auf. Das Positionsregelventil kann einen Regelmagneten aufweisen, welcher im stromlosen Zustand mit dem Positionsregelventil so zusammenwirkt, dass der Verstellzylinder die zweite hydraulische Einheit so verstellt, dass diese das Hubvolumen Null aufweist. Der Zustand, wenn die zweite hydraulische Einheit das Hubvolumen Null aufweist und die erste hydraulische Einheit das maximale Hubvolumen aufweist, wird auch als Position für die Endgeschwindigkeit bezeichnet. Das Positionsregelventil ist somit so ausgestaltet, dass es im stromlosen Zustand die hydraulischen Einheiten auf die Position für die Endgeschwindigkeit verstellt und bei vollbestromtem Zustand, d. h. bei maximaler Stromstärke, die Position zum Anfahren bei den hydraulischen Einheiten eingestellt wird. Dadurch wird zusätzlich die Regelbarkeit des Positionsregelventils verbessert, da sich bei hohem Strom die Hysterese reduziert. Somit ist gerade im Anfahrpunkt ein sehr genaues Regeln des Hubvolumens möglich. Weitere Merkmale sind der Figurenbeschreibung zu entnehmen.

Es zeigen
- Figur 1: ein Leistungsverzweigungsgetriebe mit einem Fahrbereich für Vorwärts fahrt und einem Fahrbereich für Rückwärtsfahrt; und
- Figur 2: ein Hydraulikschema zur Ansteuerung des Hubvolumens des Leis tungsverzweigungsgetriebes nach Fig. 1.

### Figur 1:

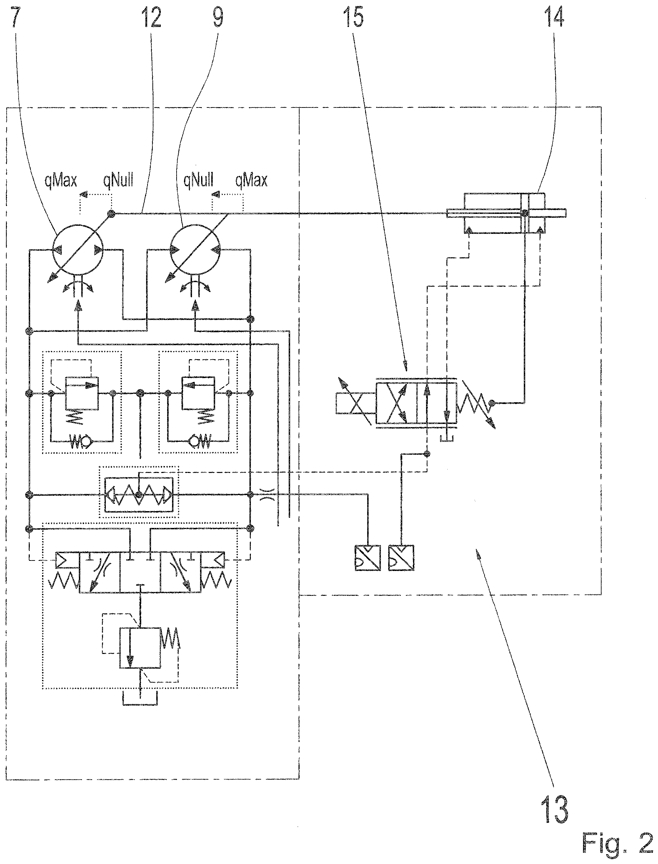

Ein Antriebsmotor 1, beispielsweise ein Verbrennungsmotor, treibt die Antriebswelle 2 an. Die Antriebswelle 2 treibt über eine Kupplung für Vorwärtsfahrt 3 eine erste Welle 4 eines Summierungsgetriebes 5 an. Die zweite Welle 6 des Summierungsgetriebes 5 ist mit der ersten hydraulischen Einheit 7 verbunden. Die erste hydraulische Einheit 7 wird auch als Pumpe bezeichnet. Die dritte Welle 8 des Summierungsgetriebes 5 steht in Wirkverbindung mit der zweiten hydraulischen Einheit 9 und der Abtriebswelle 10. Die zweite hydraulische Einheit 9 wird auch als Motor bezeichnet. Über die Kupplung für Rückwärtsfahrt 11 kann die Abtriebswelle 10 in die entgegengesetzte Richtung angetrieben werden. Die erste hydraulische Einheit 7 und die zweite hydraulische Einheit 9 sind über ein gemeinsames Joch 12 verbunden, mittels welchem das Hubvolumen der ersten hydraulischen Einheit 7 und der zweiten hydraulischen Einheit 9 verstellbar ist. Das Joch 12 wirkt mit der Verstelleinrichtung, welche in Fig. 2 schematisch dargestellt ist, zusammen. Die weiteren Details zum Summierungsgetriebe 5 und der Funktion der Verstellung der ersten hydraulischen Einheit 7 und der zweiten hydraulischen Einheit können der DE102013204746A1 entnommen werden.

### Figur 2:

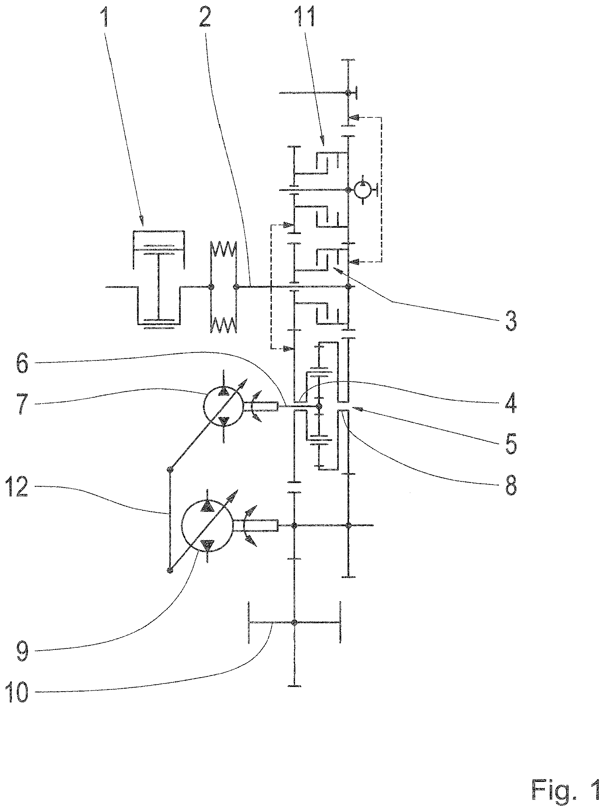

Die Verstelleinrichtung 13 weist einen Zylinder 14 auf, welcher mit dem Joch 12 verbunden ist und die erste hydraulische Einheit 7 und die zweite hydraulische Einheit 9 in ihrem Hubvolumen verstellt. Der Zylinder 14 wirkt mit einem Positionsregelventil 15 zusammen, welches je nach Beaufschlagen mit elektrischem Strom bzw. dessen Stromstärke die Position des Zylinders 14 verstellt. Das Positionsregelventil 15 wirkt so mit dem Zylinder 14 zusammen, dass im stromlosen Zustand, d. h. wenn am Positionsregelventil 15 kein Strom anliegt, der Zylinder 14 so verstellt ist, dass die zweite hydraulische Einheit 9 auf dem Hubvolumen Null und die erste hydraulische Einheit 7 auf den maximalen Hubvolumen verstellt ist. Um das Leistungsverzweigungsgetriebe nach Fig. 1 anfahren zu können, wird das Positionsregelventil 15 mit maximaler Stromstärke beaufschlagt, wodurch der Zylinder 14 so verstellt, dass die zweite hydraulische Einheit 9 auf ihr maximales Hubvolumen und die erste hydraulische Einheit 7 auf ihr minimales Hubvolumen verstellt wird. Die Funktion der weiteren Ventile, welche mit der ersten hydraulischen Einheit 7 und der zweiten hydraulischen Einheit 9 zusammenwirken, kann der DE102013200399A1, entnommen werden.

Befindet sich nun das Fahrzeug bei hoher Geschwindigkeit und durch einen Defekt wird das Positionsregelventil 15 stromlos geschaltet, so wird der Zylinder 14 so verstellt, dass die zweite hydraulische Einheit 9 auf das Hubvolumen Null und die erste hydraulische Einheit 7 auf das maximale Hubvolumen verstellt ist und gleichzeitig die Kupplung für Vorwärtsfahrt 3 und die Kupplung für Rückwärtsfahrt 11 im Öffnungssinne geöffnet sind, so dass die zweite hydraulische Einheit 9 kein Drehmoment abstützen kann und die Abtriebswelle 10 nicht so verzögert wird, dass dies zu einem unkontrollierten Rutschen des Fahrzeugs führt. Die Fahrsicherheit ist somit auch bei einem elektrischen Defekt gewährleistet.

### Bezugszeichen

- 1: Antriebsmotor
- 2: Antriebswelle
- 3: Kupplung für Vorwärtsfahrt
- 4: erste Welle
- 5: Summierungsgetriebe
- 6: zweite Welle
- 7: erste hydraulische Einheit
- 8: dritte Welle
- 9: zweite hydraulische Einheit
- 10: Abtriebswelle
- 11: Kupplung für Rückwärtsfahrt
- 12: Joch
- 13: Verstelleinrichtung
- 14: Zylinder
- 15: Positionsregelventil

## Patentansprüche

1. Leistungsverzweigungsgetriebe mit einer Antriebswelle (2), welche mit einem Antriebsmotor (1) verbindbar ist und einer Abtriebswelle (10), welche mit Fahrzeugräder verbindbar ist, einer in ihrem Hubvolumen verstellbaren ersten hydraulischen Einheit (7), welche als Motor oder als Pumpe betreibbar ist, einer in ihrem Hubvolumen verstellbaren zweiten hydraulischen Einheit (9), welche als Motor oder als Pumpe betreibbar ist und einem Summierungsgetriebe (5) mit einer ersten Welle (4), einer zweiten Welle (6) und einer dritten Welle (8), wobei die erste Welle (4) über eine Kupplung (3) mit der Antriebswelle (2) in Wirkverbindung steht, die zweite Welle (6) mit der ersten hydraulischen Einheit (7) in Wirkverbindung steht und die dritte Welle (8) mit der zweiten hydraulischen Einheit (9) und der Abtriebswelle (10) in Wirkverbindung steht und einer mit elektrischem Strom in Wirkverbindung bringbaren Verstelleinrichtung (13) zum Verstellen des Hubvolumens der ersten hydraulischen Einheit (7) und des Hubvolumens der zweiten hydraulischen Einheit (9), **dadurch gekennzeichnet, dass** die Verstelleinrichtung (13) im stromlosen Zustand die zweite hydraulische Einheit (9) auf Hubvolumen Null verstellt.

2. Leistungsverzweigungsgetriebe nach Anspruch 1, **dadurch gekennzeichnet, dass** die Verstelleinrichtung (13) im stromlosen Zustand die erste hydraulische Einheit (7) auf ihr maximales Hubvolumen verstellt.

3. Leistungsverzweigungsgetriebe nach Anspruch 1, **dadurch gekennzeichnet, dass** im stromlosen Zustand der Verstelleinrichtung (13) die Kupplung (3) im Öffnungssinne betätigt ist.

4. Leistungsverzweigungsgetriebe nach Anspruch 1, **dadurch gekennzeichnet, dass** die erste hydraulische Einheit (7) und die zweite hydraulische Einheit (9) über ein gemeinsames Joch (12) gekoppelt sind, mittels welchem das Hubvolumen verstellbar ist.

5. Leistungsverzweigungsgetriebe nach Anspruch 1, **dadurch gekennzeichnet, dass** die Verstelleinrichtung einen Verstellzylinder (14) zum Verstellen des Hubvolumens und ein mit diesem zusammenwirkendes Positionsregelventil (15) aufweist, wobei das Positionsregelventil einen Regelmagneten aufweist, welcher im stromlosen Zustand mit dem Positionsregelventil so zusammenwirkt, dass der Verstellzylinder (14) die zweite hydraulische Einheit (9) auf das Hubvolumen Null verstellt.

6. Leistungsverzweigungsgetriebe nach Anspruch 2, **dadurch gekennzeichnet, dass** das Hubvolumen der ersten hydraulischen Einheit (7) und der zweiten hydraulischen Einheit (9) im stromlosen Zustand der Verstelleinrichtung (14) dem Hubvolumen bei maximaler Drehzahl der Abtriebswelle entspricht.

7. Verfahren zum Betrieb eines Leistungsverzweigungsgetriebes mit einer Antriebswelle (2), welche mit einem Antriebsmotor (1) verbindbar ist und einer Abtriebswelle (10), welche mit Fahrzeugräder verbindbar ist, einer in ihrem Hubvolumen verstellbaren ersten hydraulischen Einheit (7), welche als Motor oder als Pumpe betreibbar ist, einer in ihrem Hubvolumen verstellbaren zweiten hydraulischen Einheit (9), welche als Motor oder als Pumpe betreibbar ist, und einem Summierungsgetriebe (5) mit einer ersten Welle (4) und einer zweiten Welle (6) und einer dritten Welle (8), wobei die erste Welle (4) über eine Kupplung (3) mit der Antriebswelle (2) in Wirkverbindung steht, die zweite Welle (6) mit der ersten hydraulischen Einheit (7) in Wirkverbindung steht und die dritte Welle (8) mit der zweiten hydraulischen Einheit (9) und der Abtriebswelle (10) in Wirkverbindung steht und einer mit elektrischem Strom in Wirkverbindung bringbaren Verstelleinrichtung (13) zum Verstellen des Hubvolumens der ersten hydraulischen Einheit (7) und des Hubvolumens der zweiten hydraulischen Einheit (9), **dadurch gekennzeichnet, dass** die Verstelleinrichtung (13) immer dann die zweite hydraulische Einheit (9) auf Hubvolumen Null verstellt, wenn die Verstelleinrichtung (13) stromlos ist.

8. Verfahren zum Betrieb eines Leistungsverzweigungsgetriebes nach Anspruch 7, **dadurch gekennzeichnet, dass** die Verstelleinrichtung (13) immer dann die erste hydraulische Einheit (7) auf ihr maximales Hubvolumen verstellt, wenn die Verstelleinrichtung (13) im stromlosen Zustand ist.

9. Verfahren zum Betrieb eines Leistungsverzweigungsgetriebes nach Anspruch 8, **dadurch gekennzeichnet, dass** die Kupplung (3) im Öffnungssinne betätigt wird, wenn die Verstelleinrichtung (13) stromlos ist.

## Claims

1. Power-split gearbox having a drive shaft (2), which is connectable to a drive motor (1), and having an output shaft (10), which is connectable to vehicle wheels, having a first hydraulic unit (7) which is of adjustable swept volume and which is operable as a motor or as a pump, having a second hydraulic unit (9) which is of adjustable swept volume and which is operable as a motor or as a pump, and having a summing gearbox (5) with a first shaft (4), a second shaft (6) and a third shaft (8), wherein the first shaft (4) is operatively connected via a clutch (3) to the drive shaft (2), the second shaft (6) is operatively connected to the first hydraulic unit (7), and the third shaft (8) is operatively connected to the second hydraulic unit (9) and to the output shaft (10), and having an adjusting device (13) which is operatively connectable to electrical current and which serves for the adjustment of the swept volume of the first hydraulic unit (7) and of the swept volume of the second hydraulic unit (9), **characterized in that** the adjusting device (13), in the electrically deenergized state, adjusts the second hydraulic unit (9) to a swept volume of zero.

2. Power-split gearbox according to Claim 1, **characterized in that** the adjusting device (13), in the electrically deenergized state, adjusts the first hydraulic unit (7) to its maximum swept volume.

3. Power-split gearbox according to Claim 1, **characterized in that**, in the electrically deenergized state of the adjusting device (13), the clutch (3) is actuated so as to open.

4. Power-split gearbox according to Claim 1, **characterized in that** the first hydraulic unit (7) and the second hydraulic unit (9) are coupled by means of a common yoke (12) by means of which the swept volume is adjustable.

5. Power-split gearbox according to Claim 1, **characterized in that** the adjusting device has an adjusting cylinder (14) for adjusting the swept volume and has a position control valve (15) interacting with said adjusting cylinder, wherein the position control valve has a control magnet which, in the electrically deenergized state, interacts with the position control valve such that the adjusting cylinder (14) adjusts the second hydraulic unit (9) to the swept volume of zero.

6. Power-split gearbox according to Claim 2, **characterized in that** the swept volume of the first hydraulic unit (7) and of the second hydraulic unit (9) in the electrically deenergized state of the adjusting device (14) corresponds to the swept volume at the maximum rotational speed of the output shaft.

7. Method for operating a power-split gearbox having a drive shaft (2), which is connectable to a drive motor (1), and having an output shaft (10), which is connectable to vehicle wheels, having a first hydraulic unit (7) which is of adjustable swept volume and which is operable as a motor or as a pump, having a second hydraulic unit (9) which is of adjustable swept volume and which is operable as a motor or as a pump, and having a summing gearbox (5) with a first shaft (4), a second shaft (6) and a third shaft (8), wherein the first shaft (4) is operatively connected via a clutch (3) to the drive shaft (2), the second shaft (6) is operatively connected to the first hydraulic unit (7), and the third shaft (8) is operatively connected to the second hydraulic unit (9) and to the output shaft (10), and having an adjusting device (13) which is operatively connectable to electrical current and which serves for the adjustment of the swept volume of the first hydraulic unit (7) and of the swept volume of the second hydraulic unit (9), **characterized in that** the adjusting device (13) adjusts the second hydraulic unit (9) to a swept volume of zero whenever the adjusting device (13) is in the electrically deenergized state.

8. Method for operating a power-split gearbox according to Claim 7, **characterized in that** the adjusting device (13) adjusts the first hydraulic unit (7) to its maximum swept volume whenever the adjusting device (13) is in the electrically deenergized state.

9. Method for operating a power-split gearbox according to Claim 8, **characterized in that** the clutch (8) is actuated so as to open when the adjusting device (13) is electrically deenergized.

## Revendications

1. Transmission à répartition de puissance comprenant un arbre d'entraînement (2) pouvant être relié à un moteur d'entraînement (1) et un arbre de sortie (10) pouvant être relié à des roues du véhicule, une première unité hydraulique (7) à cylindrée réglable qui peut fonctionner comme moteur ou comme pompe, une deuxième unité hydraulique (9) à cylindrée réglable qui peut fonctionner comme moteur ou comme pompe et une transmission de sommation (5) comprenant un premier arbre (4), un deuxième arbre (6) et un troisième arbre (8), le premier arbre (4) étant relié fonctionnellement à l'arbre d'entraînement (2) par le biais d'un accouplement (3), le deuxième arbre (6) étant relié fonctionnellement à la première unité hydraulique (7) et le troisième arbre (8) étant relié fonctionnellement à la deuxième unité hydraulique (9) et à l'arbre de sortie (10) et un dispositif de réglage (13) pouvant être relié fonctionnellement à une source de courant électrique pour régler la cylindrée de la première unité hydraulique (7) et la cylindrée de la deuxième unité hydraulique (9), **caractérisée en ce que** le dispositif de réglage (13) règle la deuxième unité hydraulique (9) à une cylindrée nulle en l'absence de courant.

2. Transmission à répartition de puissance selon la revendication 1, **caractérisée en ce que** le dispositif de réglage (13) règle la première unité hydraulique (7) à sa cylindrée maximale en l'absence de courant.

3. Transmission à répartition de puissance selon la revendication 1, **caractérisée en ce que** l'accouplement (3) est actionné dans le sens de l'ouverture lorsque le dispositif de réglage (13) n'est pas alimenté en courant.

4. Transmission à répartition de puissance selon la revendication 1, **caractérisée en ce que** la première unité hydraulique (7) et la deuxième unité hydraulique (9) sont accouplées par une culasse commune (12) au moyen de laquelle la cylindrée est réglable.

5. Transmission à répartition de puissance selon la revendication 1, **caractérisée en ce que** le dispositif de réglage comporte un cylindre de réglage (14) destiné à régler la cylindrée et une soupape de réglage de position (15) coopérant avec celui-ci, la soupape de réglage de position comprenant un aimant de réglage qui coopère avec la soupape de réglage de position en l'absence de courant de sorte que le cylindre de réglage (14) ajuste la deuxième unité hydraulique (9) à la cylindrée nulle.

6. Transmission à répartition de puissance selon la revendication 2, **caractérisée en ce que** la cylindrée de la première unité hydraulique (7) et de la deuxième unité hydraulique (9) correspond à la cylindrée à vitesse de rotation maximale de l'arbre de sortie lorsque le dispositif de réglage (14) n'est pas alimenté en courant.

7. Procédé de fonctionnement d'une transmission à répartition de puissance comprenant un arbre d'entraînement (2) pouvant être relié à un moteur d'entraînement (1) et un arbre de sortie (10) pouvant être relié à des roues du véhicule, une première unité hydraulique (7) à cylindrée réglable qui peut fonctionner comme moteur ou comme pompe, une deuxième unité hydraulique (9) à cylindrée réglable qui peut fonctionner comme moteur ou comme pompe et une transmission de sommation (5) comprenant un premier arbre (4), un deuxième arbre (6) et un troisième arbre (8), le premier arbre (4) étant relié fonctionnellement à l'arbre d'entraînement (2) par le biais d'un accouplement (3), le deuxième arbre (6) étant relié fonctionnellement à la première unité hydraulique (7) et le troisième arbre (8) étant relié fonctionnellement à la deuxième unité hydraulique (9) et à l'arbre de sortie (10) et un dispositif de réglage (13) pouvant être relié fonctionnellement à une source de courant électrique pour régler la cylindrée de la première unité hydraulique (7) et la cylindrée de la deuxième unité hydraulique (9), **caractérisé en ce que** le dispositif de réglage (13) règle toujours la deuxième unité hydraulique (9) à une cylindrée nulle seulement lorsque le dispositif de réglage (13) n'est pas alimenté en courant.

8. Procédé de fonctionnement d'une transmission à répartition de puissance selon la revendication 7, **caractérisé en ce que** le dispositif de réglage (13) règle toujours la première unité hydraulique (7) à sa cylindrée maximale seulement lorsque le dispositif de réglage (13) n'est pas alimenté en courant.

9. Procédé de fonctionnement d'une transmission à répartition de puissance selon la revendication 8, **caractérisé en ce que** l'accouplement (3) est actionné dans le sens de l'ouverture lorsque le dispositif de réglage (13) n'est pas alimenté en courant.
